# EUROPEAN PATENT APPLICATION

(11) **EP 4 398 269 A1**
(43) Date of publication of application: **10.07.2024**
(21) Application number: 22864371.4
(22) Date of filing: 24.08.2022
(51) Int. Cl.: H01B 1/08, C04B 35/057, H01M 8/12, H01M 8/1246, C01F 17/32, C25B 13/04, C25B 13/07, C25B 9/23

(54) **OXIDE ION CONDUCTIVE SOLID ELECTROLYTE**

(30) Priority: 01.09.2021 JP 2021142546
(71) Applicant: AGC INC., Chiyoda-ku, Tokyo 1008405 (JP)
(72) Inventor: KAGA, Hiroshi, Tokyo 100-8405 (JP); TODA, Yoshitake, Tokyo 100-8405 (JP); TOMENO, Satoru, Tokyo 100-8405 (JP)
(74) Representative: TBK
(86) International application number: PCT/JP2022/031872
(87) International publication number: WO 2023/032787

(57) **Abstract**

An oxide ion conductive solid electrolyte is provided. The oxide ion conductive solid electrolyte contains a mayenite-type compound having a representative composition represented by Ca₁₂Al₁₄O₃₃, and at least one metal element M selected from lanthanum (La) and yttrium (Y), wherein the metal element M is contained in a range of from 0.1 mol% through 10 mol% in terms of an oxide relative to the whole of the oxide ion conductive solid electrolyte, and the content of the mayenite-type compound in the oxide ion conductive solid electrolyte is greater than 60% by mass.

## Description

### Technical Field

The present invention relates to an oxide ion conductive solid electrolyte.

### Background Art

Solid electrolytes having an oxide ion-conducting property have various uses such as Solid Oxide Fuel Cells (SOFC), Solid Oxide Electrolysis Cells (SOEC), oxygen sensors, and oxygen pumps. In recent years, a high-efficiency energy system in which a SOFC and a SOEC are combined has been drawing attention as one implementation of a technical concept referred to as Power to Gas/Chemical, which has been drawing attention for popularization of renewable energy.

SOFCs and SOECs are both electrochemical cells that act at high temperatures. The former can use various fuels such as hydrogen, carbon monoxide, and methane. The latter can electrolyze water and carbon dioxide produced from the operation of the SOFC and return them to hydrogen and carbon monoxide.

SOFCs and SOECs each have a solid electrolyte provided between two electrodes, and operate by oxide ions being conducted through the solid electrolyte.

### Citation List

### Non-Patent Literature

NPL 1: M. Lacerda et al., "High Oxide ion conductivity in Ca12Al14O33" Nature, vol. 332, P525, April 7 (1988)
NPL 2: F.M. Lea, C.H. Desch, The Chemistry of Cement and Concrete, 2nd ed., p.52, Edward Arnold & Co., London, 1956
NPL 3: A. Pedone et al. J. Phys. Chem. B 110, 11780-11795 (2006)
NPL 4: L.B. Skinner et al. Phys. Rev. Lett. 112, 157801 (2014)

### Summary of Invention

### Technical Problem

So far, materials such as yttria-stabilized zirconia (YSZ) and Scandia-stabilized zirconia (ScSZ) have been proposed as solid electrolytes for SOFCs and SOECs.

Lately, mayenite-type compounds have been reported to express an oxide ion-conducting property (NPL 1). Mayenite-type compounds have a crystal structure containing free oxide ions in cages. Hence, there is a possibility that the free oxide ions can contribute to ion conduction.

However, the present inventors have confirmed that the ion-conducting property of existing mayenite-type compounds is not very high (for example, approximately 1/10 of YSZ).

Hence, it is necessary to further improve the oxide ion-conducting property of mayenite-type compounds in order to apply them as oxide ion conductive solid electrolytes.

The present invention has been made in this circumstance, and an object of the present invention is to provide a solid electrolyte that has a mayenite-type compound structure, and has a significantly high oxide ion-conducting property.

### Solution to Problem

The present invention provides an oxide ion conductive solid electrolyte containing:
a mayenite-type compound having a representative composition represented by Ca₁₂Al₁₄O₃₃; and
at least one metal element M selected from lanthanum (La) and yttrium (Y),
wherein the metal element M is contained in a range of from 0.1 mol% through 10 mol% in terms of an oxide relative to the whole of the oxide ion conductive solid electrolyte, and
a content of the mayenite-type compound in the oxide ion conductive solid electrolyte is greater than 60% by mass.

The present invention also provides an oxide ion conductive solid electrolyte containing:
a mayenite-type compound having a representative composition represented by Ca₁₂Al₁₄O₃₃; and
at least one metal element M selected from lanthanum (La) and yttrium (Y),
wherein the metal element M is contained in a range of from 0.1 mol% through 10 mol% in terms of an oxide relative to the whole of the oxide ion conductive solid electrolyte, and
the oxide ion conductive solid electrolyte further contains titanium (Ti) in an amount of from 0.1 mol% through 30 mol% in terms of TiO₂.

### Advantageous Effects of Invention

The present invention can provide a solid electrolyte that has a mayenite-type compound structure, and has a significantly high oxide ion-conducting property.

### Brief Description of Drawings

[FIG. 1] FIG. 1 is a drawing illustrating the result of simulative evaluation of the main diffusing species in mayenite-type compounds having a C12A7 structure (Ca₁₂Al₁₄O₃₃) containing La as the metal M.
[FIG. 2] FIG. 2 is a drawing exemplarily illustrating an example of a SOFC configuration containing an oxide ion conductive solid electrolyte according to an embodiment of the present invention.
[FIG. 3] FIG. 3 is a drawing exemplarily illustrating an example of a SOEC configuration containing an oxide ion conductive solid electrolyte according to an embodiment of the present invention.
[FIG. 4] FIG. 4 is a drawing exemplarily illustrating an example of a flow of a method for producing an oxide ion conductive solid electrolyte according to an embodiment of the present invention.
[FIG. 5] FIG. 5 is a drawing exemplarily illustrating an example of a flow of another method for producing an oxide ion conductive solid electrolyte according to an embodiment of the present invention.
[FIG. 6] FIG. 6 is a drawing illustrating an X-ray diffraction pattern of an oxide ion conductive solid electrolyte (Sample 8) according to an embodiment of the present invention.
[FIG. 7] FIG. 7 is a drawing illustrating a Cole-Cole plot obtained from an oxide ion conductive solid electrolyte (Sample 9) according to an embodiment of the present invention.

### Description of Embodiments

An embodiment of the present invention will be described below.

### (Oxide ion conductive solid electrolyte according to an embodiment of the present invention)

According to an embodiment of the present invention, an oxide ion conductive solid electrolyte is provided. The oxide ion conductive solid electrolyte contains a mayenite-type compound having a representative composition represented by Ca₁₂Al₁₄O₃₃; and at least one metal element M selected from lanthanum (La) and yttrium (Y), wherein the metal element M is contained in a range of from 0.1 mol% through 10 mol% in terms of an oxide relative to the whole of the oxide ion conductive solid electrolyte, and the content of the mayenite-type compound in the oxide ion conductive solid electrolyte is greater than 60% by mass.

In the present invention, it is possible to know the content of the mayenite-type compound contained in the oxide ion conductive solid electrolyte by a Rietveld analysis.

The oxide ion conductive solid electrolyte according to an embodiment of the present invention (hereinafter, referred to as "first solid electrolyte") contains a mayenite-type compound having a C12A7 structure.

Mayenite-type compounds have a representative composition represented by 12CaO▪7Al₂O₃, and have a characteristic crystal structure containing voids (cages) that are three-dimensionally linked and each have a diameter of approximately 0.4 nm.

The lattice framework that forms the cages bears positive charges, and forms twelve cages per unit cell. One sixth of the cages are internally occupied with oxide ion, and hence satisfy the crystal's electroneutrality condition. However, the oxide ions in such cages have a property chemically different from that of other oxygen ions that form the lattice framework. Hence, the oxide ions in the cages are referred to particularly as free oxide ions.

Mayenite-type compounds are also represented by a composition formula: [Ca₂₄Al₂₈O₆₄]⁴⁺(O²⁻)₂ (see NPL 2) .

Because mayenite-type compounds contain free oxide ions in the cages as described above, they may be able to function as oxide ion conductors (see NPL 1).

However, it has been confirmed by the present inventors' analyses that the ion-conducting property of typical mayenite-type compounds having the composition formula described above is not very high (for example, approximately 1/10 of YSZ).

Hence, in order to apply mayenite-type compounds as oxide ion conductive solid electrolytes, it is necessary to further improve their oxide ion-conducting property.

So far, the present inventors have earnestly conducted research and development into the method for increasing the oxide ion-conducting property of mayenite-type compounds. As a result, the present inventors have found that addition of an oxide of a specific metal M to mayenite-type compounds can significantly increase the ion-conducting property of the mayenite-type compounds, and have achieved the present invention. Here, the metal M is either or both of lanthanum (La) and yttrium (Y).

Hence, the first solid electrolyte contains either or both of La and Y.

The metal M is contained in the oxide ion conductive solid electrolyte in the range of from 0.1 mol% through 10 mol% in terms of an oxide.

When the content of the metal M is less than 0.1 mol%, no significant effect may appear in the ion-conducting property of the mayenite-type compound. When the metal M added is greater than 10 mol%, phase heterogeneity increases, and it becomes difficult to obtain an oxide ion conductive solid electrolyte mainly composed of a mayenite-type compound. However, so long as a significant effect appears in the ion-conducting property, the mass fraction of the mayenite-type compound in the first solid electrolyte may be less than 100%.

Particularly, in the first solid electrolyte, the mayenite-type compound itself may contain either or both of La and Y. In this case, either or both of La and Y may be positioned in the sites of Ca atoms of the mayenite-type compound. Particularly, the mole ratio (M/Ca) of the metal M to the Ca atom may be in the range of 0.015 ≤ M/Ca ≤ 0.19.

In the first solid electrolyte, the metal M may satisfy 0.84 ≤ (M+Ca)/Al ≤ 0.88 on a mole ratio basis, and may satisfy Ca₂₄₋ₓMₓAl₂₈O_{66+x/2}.

Particularly, in the first solid electrolyte, it is preferable that the metal M is contained in the oxide ion conductive solid electrolyte in the range of from 0.5 mol% through 5.3 mol% in terms of an oxide. By adjusting the content of the metal M to 5.3 mol% or less, it is possible to obtain an oxide ion-conducting solid electrolyte scarcely containing a different phase and mainly composed of a mayenite-type compound in which the metal M is contained in the crystal structure.

Presently, the following is considered the reason why addition of a predetermined amount of the metal M to a mayenite-type compound in an embodiment of the present invention increases the ion-conducting property.

When the metal M (either or both of La and Y) is added to a mayenite-type compound, it is considered that the metal M atoms are positioned to replace the sites of Ca atoms preferentially.

Here, Ca atoms are divalent, whereas La atoms and Y atoms are trivalent. Hence, when Ca atoms are replaced with La atoms and Y atoms, the oxide ion concentration increases in order to maintain electroneutrality. Along with this, the concentration of the free oxide ions in the cages increases. As a result of this, it is considered that the ion-conducting property is improved. Moreover, the trivalent La has an ionic radius greater than that of the divalent Ca atom. Hence, when a site of a Ca atom is replaced with La, the distance between La and the oxide ion becomes greater, to weaken the electrostatic attractive force between La positioned in the site of the Ca atom and the oxide ion and facilitate migration of the free oxide ions in the cages. It is considered that the ion-conducting property is improved as a result.

However, the described mechanism behind the improvement of the ion-conducting property is based on the experimental studies at present. The ion-conducting property of the first solid electrolyte may be improved through any other mechanism.

The first solid electrolyte may further contain titanium (Ti).

Ti may be contained in the range of from 0.1 mol% through 30 mol% in terms of an oxide relative to the whole of the first solid electrolyte.

In the first solid electrolyte, it is considered that Ti is positioned to replace the sites of aluminum (Al) atoms of the mayenite-type compound. The mole ratio Ti/Al of the Ti atom to the Al atom may be 0.015 ≤ Ti/Al ≤ 0.50. In a case where the first solid electrolyte contains Ti, the metal M may satisfy 0.84 ≤ (M+Ca)/(Al+Ti) ≤ 0.88 on a mole ratio basis, and may satisfy Ca₂₄₋ₓMₓAl_{28-y}Ti_{y}O_{66+x/2+y/2}.

When the first solid electrolyte contains Ti, the ion-conducting property is further improved. The reason is predicted as follows.

When Ti is added to a mayenite-type compound, it is considered that Ti atoms are positioned to replace the sites of Al atoms preferentially. However, Al atoms are trivalent, whereas Ti atoms are tetravalent. Hence, when an Al atom is replaced with a Ti atom, the oxide ion concentration increases in order to maintain electroneutrality. Along with this, the concentration of the free oxide ions in the cages increases. As a result of this, it is considered that the ion-conducting property is improved.

Such a first solid electrolyte has an ion-conducting property significantly higher than that of existing mayenite-type compounds. Hence, the first solid electrolyte is expected to be used as a solid electrolyte of, for example, a SOFC and a SOEC.

According to another embodiment of the present invention, an oxide ion conductive solid electrolyte is provided. The oxide ion conductive solid electrolyte contains a mayenite-type compound having a representative composition represented by Ca₁₂Al₁₄O₃₃; and at least one metal element M selected from lanthanum (La) and yttrium (Y), wherein the metal element M is contained in a range of from 0.1 mol% through 10 mol% in terms of an oxide relative to the whole of the oxide ion conductive solid electrolyte, and the oxide ion conductive solid electrolyte further contains titanium (Ti) in an amount of from 0.1 mol% through 30 mol% in terms of TiO₂.

Like the first solid electrolyte described above, the oxide ion conductive solid electrolyte according to the another embodiment of the present invention (hereinafter, referred to as "second solid electrolyte") also has an ion-conducting property significantly higher than that of existing mayenite-type compounds. Hence, the second solid electrolyte is expected to be used as a solid electrolyte of, for example, a SOFC and a SOEC.

### (Study into ion-conducting species)

The element that serves as the main ion conductor in the mayenite-type compound having a C12A7 structure containing the metal M was evaluated by simulation.

In the simulation, a relationship between the mean square displacement MSD of the oxide ion in the material at 1 atm at 1200 K, and elapsed time was calculated based on the classical molecular dynamics calculation.

The code used for the calculation was LAMMPS. For the two-body potential between the constituent elements of each material, which is an input parameter, values reported by Pedone et al. (see NPLs 3 and 4) were used.

An NPT-ensemble of a system, in which La was substituted for 2.7 mol% of Ca in a 6×6×6 expanded supercell of a unit cell, was molecular-dynamically simulated for 1 nanosecond. After the temperature, the internal energy, and the lattice constants became stable, an NVE-ensemble was molecular-dynamically simulated for 1 nanosecond.

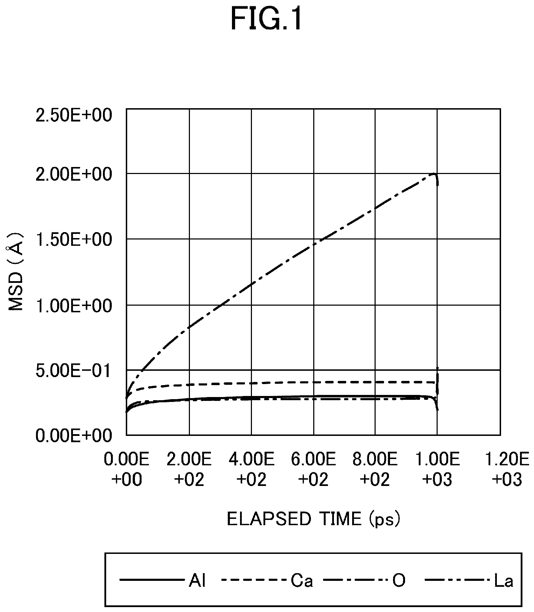

FIG. 1 illustrates the results of the simulation. In FIG. 1, the horizontal axis represents elapsed time, and the vertical axis represents the MSD of each element.

The slope of the MSD is proportional to the coefficient of diffusion. Hence, FIG. 1 indicates that an element having a greater MSD slope is more likely to be diffused inside a mayenite-type compound.

As indicated in FIG. 1, it was revealed that the main ion conductor in the compound obtained by substituting the metal M for some Ca atoms of a mayenite-type compound was the oxide ion.

### (Other features)

Because of being ceramic, the first solid electrolyte and the second solid electrolyte have a high high-temperature stability. For example, the first solid electrolyte and the second solid electrolyte can be stably used in a temperature range of 800°C or higher.

### (Uses)

The first solid electrolyte and the second solid electrolyte are stable even at high temperatures, and have a significantly high oxide ion-conducting property. Hence, the first solid electrolyte and the second solid electrolyte can be used as a solid electrolyte layer of a Solid Oxide Fuel Cell (SOFC) and a solid electrolyte layer of a SOEC.

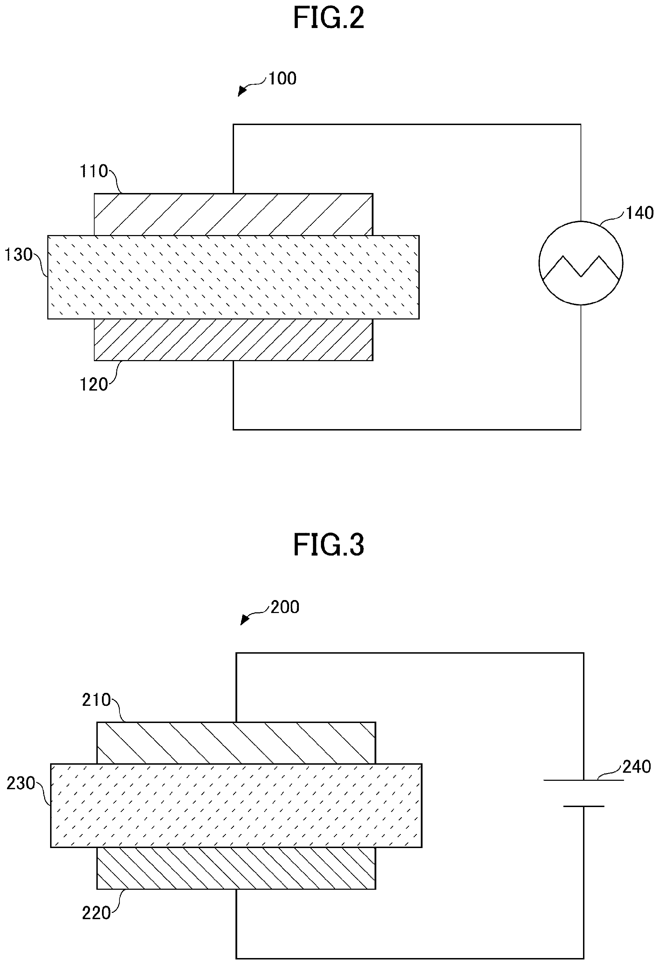

FIG. 2 exemplarily illustrates an example of the configuration of a SOFC.

As illustrated in FIG. 2, the SOFC 100 includes an oxygen electrode 110, a fuel electrode 120, and a solid electrolyte layer 130 between these electrodes.

For example, the following reaction occurs at the oxygen electrode 110:

O₂+4e⁻→2O²⁻ Formula (1)

The oxide ion produced at the oxygen electrode 110 passes through the solid electrolyte layer 130, and reaches the fuel electrode 120 on the opposite side. For example, the following reaction occurs at the fuel electrode 120:

2H₂+2O²⁻→2H₂O+4e⁻ Formula (2)

Hence, when the SOFC 100 is connected to an external load 140, the reactions of Formula (1) and Formula (2) continue. Hence, power can be supplied to the external load 140.

In the SOFC 100, for example, the first solid electrolyte and the second solid electrolyte can be used as the solid electrolyte layer 130. The first solid electrolyte and the second solid electrolyte can also be used as the solid electrolyte component that forms the oxygen electrode 110 and the fuel electrode 120.

The SOFC 100 can obtain a significantly high power generation efficiency, because the solid electrolyte layer 130 has a significantly high oxide ion-conducting property.

FIG. 3 exemplarily illustrates an example of the configuration of a SOEC.

As illustrated in FIG. 3, the SOEC 200 includes an oxygen electrode 210, a fuel electrode 220, and a solid electrolyte layer 230 between these electrodes.

For example, the following reaction occurs at the oxygen electrode 210:

2O²⁻→O₂+4e⁻ Formula (3)

Moreover, for example, the following reaction occurs at the fuel electrode 220:

2H₂O+4e⁻→2H₂+2O²⁻ Formula (4)

The oxide ion produced at the fuel electrode 220 passes through the solid electrolyte layer 230 and reaches the oxygen electrode 210 on the opposite side. Hence, when the SOEC 200 is connected to an external power supply 240, the reactions of Formula (3) and Formula (4) continue.

In the SOEC 200, for example, the first solid electrolyte and the second solid electrolyte can be used as the solid electrolyte layer 230. The first solid electrolyte and the second solid electrolyte can also be used as the solid electrolyte component that forms the oxygen electrode 210 and the fuel electrode 220.

The SOEC 200 can obtain a significantly high electrolysis efficiency, because the solid electrolyte layer 230 has a significantly high oxide ion-conducting property.

Moreover, the solid electrolyte according to an embodiment of the present invention may be used in any form. For example, the solid electrolyte according to an embodiment of the present invention may be provided in the form of a powder. Alternatively, the solid electrolyte according to an embodiment of the present invention may be provided in the form of a slurry, a paste, or a dispersion liquid by being mixed with, for example, either or both of a solvent and a binder.

In addition to these, various forms of use are conceivable.

### (Method for producing oxide ion conductive solid electrolyte according to an embodiment of the present invention)

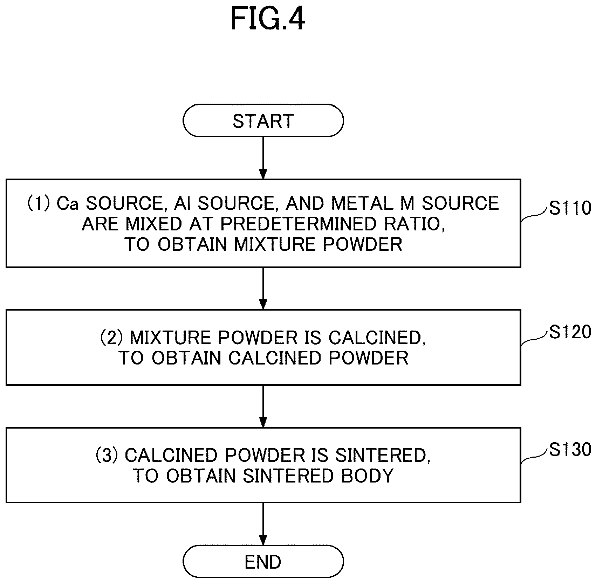

Next, with reference to FIG. 4, an example of a method for producing the oxide ion conductive solid electrolyte according to an embodiment of the present invention will be described.

FIG. 4 exemplarily illustrates an example of the flow of the method for producing the oxide ion conductive solid electrolyte according to an embodiment of the present invention (hereinafter, referred to as "first production method").

As illustrated in FIG. 4, the first production method includes:
(1) a step of mixing a Ca source, an Al source, and a metal M source at a predetermined ratio, to obtain a mixture powder (step S110);
(2) a step of calcining the mixture powder, to obtain a calcined powder (step S120); and
(3) a step of sintering the calcined powder, to obtain a sintered body (step S130).

Each step will be described below. Here, for example, the first solid electrolyte is taken as an example, and the production method for it will be described. However, it will be clear to a person skilled in the art upon reading the present specification that the first production method is also applicable as the production method for the second solid electrolyte.

### (Step S110)

First, a mixture powder is prepared. For this purpose, a Ca source, an Al source, and a metal M source are mixed at a predetermined ratio.

The Ca source may be selected from, for example, metal calcium, calcium carbonate, calcium oxide, calcium hydroxide, calcium nitrate, and calcium acetate.

The Al source may be selected from, for example, metal aluminum, α alumina, γ alumina, aluminum hydroxide, aluminum nitrate, and aluminum sulfate.

The metal M source may be selected from, for example, metal lanthanum, lanthanum oxide, metal yttrium, and yttrium oxide.

The raw materials are weighed out and mixed such that a mayenite-type compound having the intended composition is obtained.

The mixing method is not particularly limited so long as a uniform mixture powder is obtained.

### (Step S120)

Next, the mixture powder is calcined.

The calcining step is performed in order to desorb compounds such as carbonic acid and nitric acid contained in the mixture powder, and facilitate production of the intended mayenite-type compound in the next sintering step.

The calcining conditions are not particularly limited. However, in order to obtain the intended mixture oxide, the calcining temperature is preferably 1,000°C or higher. However, when the calcining temperature is excessively high, the mixture powder is excessively crystallized. Hence, the calcining temperature is preferably 1,300°C or lower.

The calcining time is, for example, approximately from 5 hours through 24 hours. However, the calcining time varies depending on the calcining temperature. The higher the calcining temperature, the more the calcining time can be shortened.

As a result, a calcined powder is obtained.

The calcined powder may be pulverized as needed. The average particle diameter through pulverization may be in a range of, for example, from 0.1 um through 100 um.

### (Step S130)

Next, the calcined powder is sintered.

The sintering step is performed in order to obtain a dense sintered body having the intended crystal phase.

The calcined powder may be molded before the sintering step, and the sintering step may be performed using the obtained molded body.

For example, the molding conditions are not particularly limited. Common molding methods such as a uniaxial molding method or an isostatic pressing method may be employed.

The sintering method is not particularly limited. For example, the calcined powder or a molded body may be sintered by a pressure-less sintering method at normal pressure.

Alternatively, the calcined powder may be sintered using a pressure sintering method such as hot press sintering or spark plasma sintering. In this case, molding and sintering may be performed at the same time.

The sintering temperature is not particularly limited so long as an appropriate sintered body is obtained, yet is preferably in a range of from 1,200°C through 1,400°C. When the sintering temperature is excessively low, a dense sintered body may not be obtained. When the sintering temperature is excessively high, the processed body may melt.

It is desirable to select an appropriate sintering time depending on the sintering temperature. In general, sintering is completed in a shorter time as the sintering temperature is higher.

An appropriate sintering time, which may vary depending on the sintering temperature, is, for example, approximately from 5 hours through 48 hours in a case of a pressure-less sintering method, and is, for example, approximately from 5 minutes through 60 minutes in a case of a pressure sintering process by a spark plasma.

When a pressure sintering process is performed using a container made of carbon, carbon may adhere to the surface of the sintered body. In such a case, it is possible to remove the adhering carbon by a thermal treatment at an atmospheric pressure at from 800°C through 1,000°C for approximately 5 hours.

Through the steps described above, the oxide ion conductive solid electrolyte according to an embodiment of the present invention can be produced.

### (Another method for producing oxide ion conductive solid electrolyte according to an embodiment of the present invention)

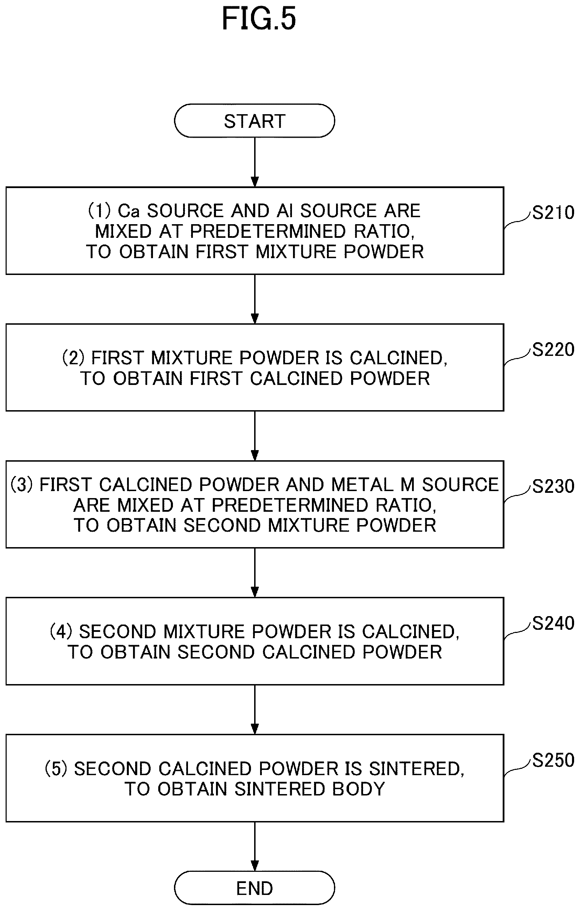

Next, with reference to FIG. 5, an example of another method for producing the oxide ion conductive solid electrolyte according to an embodiment of the present invention will be described.

FIG. 5 exemplarily illustrates an example of the flow of the another method for producing the oxide ion conductive solid electrolyte according to an embodiment of the present invention (hereinafter, referred to as "second production method").

As illustrated in FIG. 5, the second production method includes:
(1) a step of mixing a Ca source and an Al source at a predetermined ratio, to obtain a first mixture powder (step S210);
(2) a step of calcining the first mixture powder, to obtain a first calcined powder(step S220);
(3) a step of mixing the first calcined powder and a metal M source at a predetermined ratio, to obtain a second mixture powder (step S230);
(4) a step of calcining the second mixture powder, to obtain a second calcined powder (step S240); and
(5) a step of sintering the second calcined powder, to obtain a sintered body (step S250).

Each step included in the second production method can be easily understood by a person ordinarily skilled in the art based on the descriptions about the step S110 to the step S130 of the first production method described above. Hence, descriptions about the details of each step will be omitted here.

However, in the second production method, the oxide ion conductive solid electrolyte is produced through two calcining steps (step S220 and step S240), unlike in the first production method.

In this case, it is possible to produce an oxide ion conductive solid electrolyte having a more uniform composition than when the mixture powder containing the Ca source, the Al source, and the metal M source is calcined all at once as in the first production method.

That is, according to the first production method, there is a possibility that a heterogenous phase may be formed through reaction of Ca and the metal M that have a high reactivity with each other. As compared with this, in the second production method, it is possible to previously prepare a calcined powder, in which Ca and Al have reacted and bound with each other, in the first calcining step (step S220). Hence, in the second calcining step (step S240), it is possible to more reliably introduce the metal M into a desired site in the mayenite-type compound.

The method for producing the oxide ion conductive solid electrolyte according to an embodiment of the present invention has been described above, using the first production method and the second production method as examples. However, the foregoing description is a mere example, and the oxide ion conductive solid electrolyte according to an embodiment of the present invention may be produced by any other method such as a hydrothermal method, a sol/gel method, and a liquid phase combustion method.

### [Examples]

Examples of the present invention will be described below.

In the following description, Example 1 to Example 12, as well as Example 31 and Example 32 are Examples, and Example 21 to Example 23 are Comparative Examples.

### (Example 1)

A sintered body was produced by the following method.

### [Blending step]

A calcium carbonate powder (4.20 g), an α alumina powder (2.55 g), and an yttrium oxide powder (0.101 g) were each weighed out. They were added into a pot in which zirconia balls 5 mm in diameter and 10 cc of isopropanol were added, and pulverized and mixed for 3 hours by a planetary ball mill method. Next, the mixture powder was dried at 100°C, to remove isopropanol. Then, the mixture powder was further sieved, to be separated from the zirconia balls.

### [Calcining step]

The obtained mixture powder was added into an alumina crucible, and calcined in open air at 1,200°C for 5 hours. The obtained sample was pulverized in an agate mortar, to produce a calcined powder.

### [Sintering step]

The calcined powder (1 g) was added into hardmetal dies for a diameter of 1.5 cm and uniaxially molded by application of a pressure of 20 kN using a hydraulic press machine. Then, the resulting product was isostatically pressed at 196 MPa, to produce a pellet having a diameter of 1.5 cm. The pellet was thermally treated in open air at 1,200°C for 12 hours, to obtain a sintered body having a diameter of 1.3 cm and a thickness of 2 mm.

The obtained sintered body is referred to as "Sample 1". In Sample 1, the Y content was 0.66 mol% in terms of Y₂O₃, and the Y/Ca mole ratio was 0.021.

### (Example 2 to Example 5)

Sintered bodies were produced by the same method as in Example 1. However, in Example 2 to Example 5, mixture powders were prepared by changing the raw material blending ratios in [Blending step] described above from Example 1. The other steps were the same as in Example 1.

The obtained sintered bodies are referred to as "Sample 2" to "Sample 5".

### (Example 6)

A calcium carbonate powder (4.23 g), an α alumina powder (2.54 g), and a lanthanum oxide powder (0.0871 g) were each weighed out. They were added into a pot in which zirconia balls 5 mm in diameter and 10 cc of isopropanol were added, and pulverized and mixed for 3 hours by a planetary ball mill method. Next, the mixture powder was dried at 100°C, to remove isopropanol. Then, the mixture powder was further sieved, to be separated from the zirconia balls.

### [Calcining step]

The obtained mixture powder was added into an alumina crucible, and calcined in open air at 1,300°C for 5 hours. The obtained sample was pulverized in an agate mortar, to produce a calcined powder.

### [Sintering step]

The calcined powder (1 g) was added into hardmetal dies for a diameter of 1.5 cm and uniaxially molded by application of a pressure of 20 kN using a hydraulic press machine. Then, the resulting product was isostatically pressed at 196 MPa, to produce a pellet having a diameter of 1.5 cm. The pellet was thermally treated in open air at 1,300°C for 12 hours, to obtain a sintered body having a diameter of 1.3 cm and a thickness of 2 mm.

The obtained sintered body is referred to as "Sample 6". In Sample 6, the La content was 0.4 mol% in terms of La₂O₃, and the La/Ca mole ratio was 0.013.

### (Example 7 to Example 11)

Sintered bodies were produced by the same method as in Example 6. However, in Example 7 to Example 11, mixture powders were prepared by changing the raw material blending ratios in [Blending step] described above from Example 6. The other steps were the same as in Example 6.

The obtained sintered bodies are referred to as "Sample 7" to "Sample 11".

### (Example 12)

A calcium carbonate powder (3.75 g), an α alumina powder (2.43 g), yttrium oxide (0.192 g), and a lanthanum oxide powder (0.277 g) were each weighed out. They were added into a pot in which zirconia balls 5 mm in diameter and 10 cc of isopropanol were added, and pulverized and mixed for 3 hours by a planetary ball mill method. Next, the mixture powder was dried at 100°C, to remove isopropanol. Then, the mixture powder was further sieved, to be separated from the zirconia balls.

### [Calcining step]

The obtained mixture powder was added into an alumina crucible, and calcined in open air at 1,300°C for 5 hours. The obtained sample was pulverized in an agate mortar, to produce a calcined powder.

### [Sintering step]

The calcined powder (1 g) was added into hardmetal dies for a diameter of 1.5 cm and uniaxially molded by application of a pressure of 20 kN using a hydraulic press machine. Then, the resulting product was isostatically pressed at 196 MPa, to produce a pellet having a diameter of 1.5 cm. The pellet was thermally treated in open air at 1,300°C for 12 hours, to obtain a sintered body having a diameter of 1.3 cm and a thickness of 2 mm.

The obtained sintered body is referred to as "Sample 12". In Sample 12, the Y content was 1.4 mol% in terms of Y₂O₃, the La content was 1.4 mol% in terms of La₂O₃, and (Y+La)/Ca was 0.091 on the basis of a mole ratio M.

### (Example 21)

A sintered body was produced by the same method as in Example 1. However, in Example 21, only calcium carbonate (4.33 g) and α alumina (2.57 g) were mixed in [Blending step] described above, to prepare a mixture powder. That is, a mixture powder was prepared without adding the metal M source. The other steps were the same as in Example 1.

The obtained sintered body is referred to as "Sample 21".

### (Example 22)

A sintered body was produced by the same method as in Example 1. However, in Example 22, a mixture powder was prepared by changing the raw material blending ratio in [Blending step] described above from Example 1. The Y content was 5.6 mol% in terms of Y₂O₃, and the Y/Ca mole ratio was 0.2.

The firing temperature in [Sintering step] described above was 1,150°C.

The other steps were the same as in Example 1.

The obtained sintered body is referred to as "Sample 22".

### (Example 23)

A sintered body was produced by the same method as in Example 6. However, in Example 23, a mixture powder was prepared by changing the raw material blending ratio in [Blending step] described above from Example 6. The La content was 1.3 mol% in terms of La₂O₃, and the La/Ca mole ratio was 0.043.

The firing temperature in [Sintering step] described above was 1,200°C.

The other steps were the same as in Example 6.

The obtained sintered body is referred to as "Sample 23".

For example, the raw materials of each sample and the firing condition are collectively indicated in Table 1 below.

**[Table 1]**

| Sample No. | Metal M | | | Firing temperature (°C) |
|---|---|---|---|---|
| | Type | Content (mol%) in terms of oxide | M/Ca (mole ratio) | |
| 1 | Y | 0.66 | 0.021 | 1,200 |
| 2 | Y | 1.3 | 0.043 | 1,200 |
| 3 | Y | 2.7 | 0.091 | 1,200 |
| 4 | Y | 5.2 | 0.19 | 1,200 |
| 5 | Y | 5.6 | 0.2 | 1,200 |
| 6 | La | 0.4 | 0.013 | 1,300 |
| 7 | La | 0.67 | 0.021 | 1,300 |
| 8 | La | 1.3 | 0.043 | 1,300 |
| 9 | La | 2.7 | 0.091 | 1,300 |
| 10 | La | 5.2 | 0.19 | 1,300 |
| 11 | La | 7.0 | 0.26 | 1,300 |
| 12 | Y+La | 1.4+1.4 | 0.091 | 1,300 |
| 21 | Absent | - | 0 | 1,200 |
| 22 | Y | 5.6 | 0.2 | 1,150 |
| 23 | La | 1.3 | 0.043 | 1,200 |

### (Evaluation)

Each sample was evaluated in terms of the following.

### (X-ray diffractometry)

X-ray diffractometry was performed using each sample. The content of the mayenite-type compound contained in the sample was calculated from the obtained result by a Rietveld analysis.

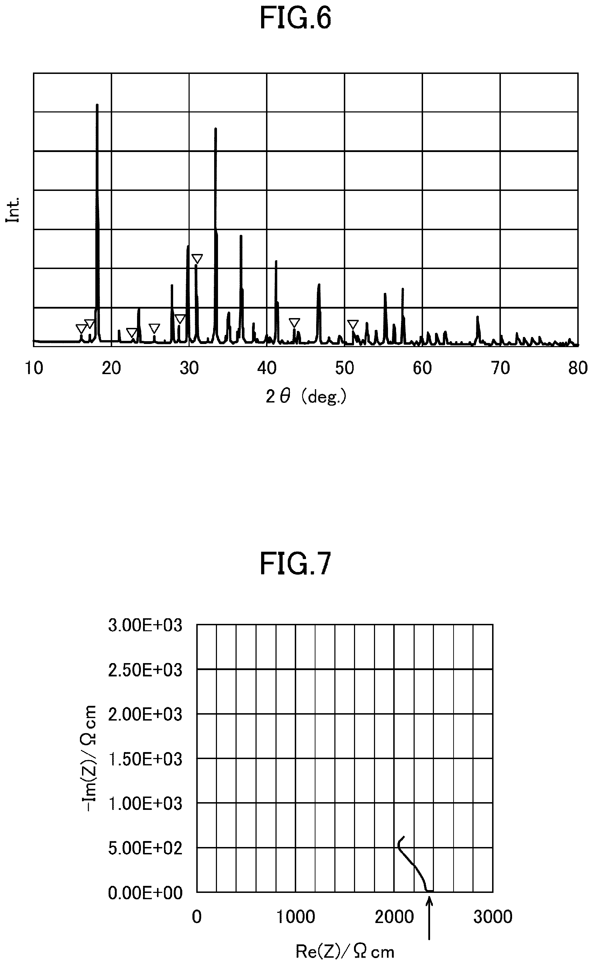

FIG. 6 illustrates the X-ray diffraction pattern obtained from Sample 8. In FIG. 6, each unmarked peak corresponds to the crystal phase of the mayenite-type compound, and each peak denoted by a wedge-shaped symbol corresponds to the crystal phase of LaCaAl₃O₇, which was a different phase.

Hence, Sample 8 was confirmed to contain a mayenite-type compound. The results of the Rietveld analysis indicate that the content of the mayenite-type compound in Sample 8 was 86.6% by mass.

The result of evaluating the content of the mayenite-type compound obtained from each sample is indicated in "Content (% by mass) of mayenite-type compound" field of Table 2. In Table 2, "A" means that the content of the mayenite-type compound was 60% by mass or greater, and "B" means that the content of the mayenite-type compound was less than 60% by mass.

**[Table 2]**

| Sample No. | Content (% by mass) of mayenite-type compound | Resistivity (relative ratio) |
|---|---|---|
| 1 | A | 0.43 |
| 2 | A | 0.37 |
| 3 | A | 0.25 |
| 4 | A | 0.38 |
| 5 | A | 0.46 |
| 6 | A | 0.44 |
| 7 | A | 0.38 |
| 8 | A | 0.24 |
| 9 | A | 0.10 |
| 10 | A | 0.22 |
| 11 | A | 0.47 |
| 12 | A | 0.23 |
| 21 | A | 1 |
| 22 | B | 0.83 |
| 23 | B | 0.65 |

From the results, it was revealed that the content of the mayenite-type compound was 60% by mass or greater in Sample 1 to Sample 12. On the other hand, it was revealed that the content of the mayenite-type compound was less than 60% by mass in Sample 22 and Sample 23.

### (Resistivity measurement)

Resistivity measurement was performed using each sample. For resistivity measurement, an impedance method was used.

First, the surface of each sample was polished with sandpaper of from #80 through #1000 to remove some of the surface and smooth it out.

Next, a platinum electrode having a diameter of 6 mm and a thickness of 10 um was set on the polished surface via a platinum paste. This sample was thermally treated in an open air atmosphere at 1,000°C for 15 minutes, to solidify the platinum paste.

Next, the sample was set in an electric furnace having an open air atmosphere. The sample was connected to a potentio-galvanostat (SP-150 obtained from Biologic, Inc.) through a platinum wire coupled to the platinum electrode.

Next, the sample was heated to 850°C, and retained in the state for 120 minutes, to stabilize the temperature of the sample.

After the temperature of the sample stabilized, impedance measurement was performed, to generate a Cole-Cole plot. The measurement frequency was from 1 MHz through 100 mHz.

The resistivity was obtained at the intersection with the horizontal axis (real axis) of the obtained Cole-Cole plot.

FIG. 7 illustrates the Cole-Cole plot obtained from Sample 9, as an example. In this example, the resistivity of Sample 9 was obtained based on the position of the arrow.

The results obtained from the respective samples are collectively indicated in the "Resistivity" field of Table 2 above. In Table 2, the resistivity of each sample is indicated as a ratio to the resistivity obtained from Sample 21.

From these results, it can be seen that the resistivities (relative ratios) of Sample 22 and Sample 23 were 0.83 and 0.65, respectively, and did not decrease much from that of Sample 21, which was a mayenite-type compound free of the metal M.

On the other hand, it was revealed that the resistivities of Sample 1 to Sample 12 were greatly decreased from that of Sample 21.

Hence, it was revealed that the resistivity significantly decreased in the mayenite-type compound samples to which the metal M was added in an amount of from 0.1 mol% through 10 mol% in terms of an oxide.

From these results, it could be inferred that a solid electrolyte obtained by adding the metal M to a mayenite-type compound could exhibit a better ion-conducting property than could by existing mayenite-type compounds.

### (Example 31)

A sintered body was produced by the same method as in Example 1. However, in Example 31, a titanium dioxide powder was used as a raw material in addition to a calcium carbonate powder, an α alumina powder, and an yttrium oxide powder in [Blending step] described above. The titanium dioxide powder was added in an amount of 10 mol% relative to the whole. The Ti/Al ratio in the mixture powder was 0.17.

The other steps were the same as in Example 1.

The obtained sintered body is referred to as "Sample 31". In Sample 31, the Y content was 2.6 mol% in terms of Y₂O₃, and the Y/Ca mole ratio was 0.091.

### (Example 32)

A sintered body was produced by the same method as in Example 6. However, in Example 32, a titanium dioxide powder was used as a raw material in addition to a calcium carbonate powder, an α alumina powder, and a lanthanum oxide powder in [Blending step] described above. The titanium dioxide powder was added in an amount of 2.7 mol% relative to the whole. The Ti/Al ratio in the mixture powder was 0.037.

The other steps were the same as in Example 6.

The obtained sintered body is referred to as "Sample 32". In Sample 32, the La content was 2.7 mol% in terms of La₂O₃, and the La/Ca mole ratio was 0.091.

For example, the raw materials of Sample 31 and Sample 32 and the firing condition are collectively indicated in Table 3 below.

**[Table 3]**

| Sample No. | Metal M | | | Ti content (molt) in terms of oxide | Ti/Al (mole ratio) | Firing temperature (°C) |
|---|---|---|---|---|---|---|
| | Type | Content (mol%) in terms of oxide | M/Ca (mole ratio) | | | |
| 31 | Y | 2.6 | 0.091 | 10 | 0.17 | 1,200 |
| 32 | La | 2.7 | 0.091 | 2.7 | 0.037 | 1,300 |

### (Evaluation)

The resistivities of Sample 31 and Sample 32 were measured by the method described above.

As a result of the measurement, the resistivity of Sample 31 was 0.096 times as high as the resistivity of Sample 21, and the resistivity of Sample 32 was 0.083 times as high as the resistivity of Sample 21.

From these results, it was revealed that the resistivities of Sample 31 and Sample 32 were greatly decreased.

### (Aspects of the present invention)

The present invention includes the following aspects.

### (Aspect 1)

An oxide ion conductive solid electrolyte, including:
a mayenite-type compound having a representative composition represented by Ca₁₂Al₁₄O₃₃; and
at least one metal element M selected from lanthanum (La) and yttrium (Y),
wherein the metal element M is contained in a range of from 0.1 mol% through 10 mol% in terms of an oxide relative to a whole of the oxide ion conductive solid electrolyte, and
a content of the mayenite-type compound in the oxide ion conductive solid electrolyte is greater than 60% by mass.

### (Aspect 2)

The oxide ion conductive solid electrolyte according to Aspect 1,
wherein the metal element M is contained in the mayenite-type compound.

### (Aspect 3)

The oxide ion conductive solid electrolyte according to Aspect 2,
wherein the metal element M is positioned in a site of a Ca atom in the mayenite-type compound.

### (Aspect 4)

The oxide ion conductive solid electrolyte according to any one of Aspects 1 to 3,
wherein a mole ratio (M/Ca) of the metal element M to Ca atom satisfies 0.015 ≤ M/Ca ≤ 0.19.

### (Aspect 5)

The oxide ion conductive solid electrolyte according to any one of Aspects 1 to 4,
wherein the metal element M is contained in a range of from 0.5 mol% through 5.3 mol% in terms of an oxide in the oxide ion conductive solid electrolyte.

### (Aspect 6)

The oxide ion conductive solid electrolyte according to any one of Aspects 1 to 5, further including:
titanium (Ti) in an amount of from 0.1 mol% through 30 mol% in terms of TiO₂.

### (Aspect 7)

The oxide ion conductive solid electrolyte according to Aspect 6,
wherein the Ti is positioned in a site of an Al atom in the mayenite-type compound.

### (Aspect 8)

An oxide ion conductive solid electrolyte, including:
a mayenite-type compound having a representative composition represented by Ca₁₂Al₁₄O₃₃; and
at least one metal element M selected from lanthanum (La) and yttrium (Y),
wherein the metal element M is contained in a range of from 0.1 mol% through 10 mol% in terms of an oxide relative to a whole of the oxide ion conductive solid electrolyte, and
the oxide ion conductive solid electrolyte further contains titanium (Ti) in an amount of from 0.1 mol% through 30 mol% in terms of TiO₂.

### (Aspect 9)

The oxide ion conductive solid electrolyte according to any one of Aspects 1 to 8,
wherein 0.84 ≤ (M+Ca)/Al ≤ 0.88 is satisfied.

### (Aspect 10)

A fuel battery cell, including:
the oxide ion conductive solid electrolyte of any one of Aspects 1 to 9.

### (Aspect 11)

An electrolysis cell, including:
the oxide ion conductive solid electrolyte of any one of Aspects 1 to 9.

The present application claims priority to Japanese Patent Application No. 2021-142546 filed September 1, 2021, the entire contents of which are incorporated herein by reference.

### Reference Signs List

- 100: SOFC
- 110: oxygen electrode
- 120: fuel electrode
- 130: solid electrolyte layer
- 140: external load
- 200: SOEC
- 210: oxygen electrode
- 220: fuel electrode
- 230: solid electrolyte layer
- 240: external power supply

## Claims

1. An oxide ion conductive solid electrolyte, comprising:
a mayenite-type compound having a representative composition represented by Ca₁₂Al₁₄O₃₃; and
at least one metal element M selected from lanthanum (La) and yttrium (Y),
wherein the metal element M is contained in a range of from 0.1 mol% through 10 mol% in terms of an oxide relative to a whole of the oxide ion conductive solid electrolyte, and
a content of the mayenite-type compound in the oxide ion conductive solid electrolyte is greater than 60% by mass.

2. The oxide ion conductive solid electrolyte according to claim 1,
wherein the metal element M is contained in the mayenite-type compound.

3. The oxide ion conductive solid electrolyte according to claim 2,
wherein the metal element M is positioned in a site of a Ca atom in the mayenite-type compound.

4. The oxide ion conductive solid electrolyte according to claim 1 or 2,
wherein a mole ratio (M/Ca) of the metal element M to Ca atom satisfies 0.015 ≤ M/Ca ≤ 0.19.

5. The oxide ion conductive solid electrolyte according to claim 1 or 2,
wherein the metal element M is contained in a range of from 0.5 mol% through 5.3 mol% in terms of an oxide in the oxide ion conductive solid electrolyte.

6. The oxide ion conductive solid electrolyte according to claim 1 or 2, further comprising:
titanium (Ti) in an amount of from 0.1 mol% through 30 mol% in terms of TiO₂.

7. The oxide ion conductive solid electrolyte according to claim 6,
wherein the Ti is positioned in a site of an Al atom in the mayenite-type compound.

8. An oxide ion conductive solid electrolyte, comprising:
a mayenite-type compound having a representative composition represented by Ca₁₂Al₁₄O₃₃; and
at least one metal element M selected from lanthanum (La) and yttrium (Y),
wherein the metal element M is contained in a range of from 0.1 mol% through 10 mol% in terms of an oxide relative to a whole of the oxide ion conductive solid electrolyte, and
the oxide ion conductive solid electrolyte further comprises titanium (Ti) in an amount of from 0.1 mol% through 30 mol% in terms of TiO₂.

9. The oxide ion conductive solid electrolyte according to claim 1 or 2,
wherein 0.84 ≤ (M+Ca)/Al ≤ 0.88 is satisfied.

10. A fuel battery cell, comprising:
the oxide ion conductive solid electrolyte of claim 1 or 2.

11. An electrolysis cell, comprising:
the oxide ion conductive solid electrolyte of claim 1 or 2.
